# EUROPÄISCHE PATENTSCHRIFT

(11) **EP 0 719 443 B1**
(45) Veröffentlichungstag und Bekanntmachung des Hinweises auf die Patenterteilung: **07.05.1997**
(21) Anmeldenummer: 94928350.1
(22) Anmeldetag: 14.09.1994
(51) Int. Cl.: H01F 41/06, H01F 38/18, G11B 5/53

(54) **VERFAHREN UND ANORDNUNG ZUR ERZEUGUNG VON INNENWICKLUNGEN**
PROCESS AND DESIGN FOR PRODUCING INSIDE COILS
PROCEDE ET DISPOSITIF POUR LA PRODUCTION D'ENROULEMENTS INTERNES

(30) Priorität: 17.09.1993 DE 4331621
(43) Veröffentlichungstag der Anmeldung: 03.07.1996
(73) Patentinhaber: Grundig E.M.V. Elektro-Mechanische Versuchsanstalt Max Grundig GmbH & Co. KG, 90762 Fürth (DE)
(72) Erfinder: ALBRECHT, Friedrich, D-90453 Nürnberg (DE); WEISS, Otto, D-91174 Spalt (DE)
(86) Internationale Anmeldenummer: EP9403074
(87) Internationale Veröffentlichungsnummer: WO9508178

(56) Entgegenhaltungen:
- EP-A- 0 257 330
- PATENT ABSTRACTS OF JAPAN vol. 17, no. 192 (E-1350) 14. April 1993 & JP,A,04 340 210 (ALPS ELECTRIC CO LTD) 26. November 1992
- PATENT ABSTRACTS OF JAPAN vol. 13, no. 8 (E-702) 10. Januar 1989 & JP,A,63 220 507 (MITSUBISHI ELECTRIC CORP) 13. September 1988
- PATENT ABSTRACTS OF JAPAN vol. 12, no. 168 (E-611) 20. Mai 1988 & JP,A,62 279 610 (HITACHI LTD) 4. Dezember 1987
- PATENT ABSTRACTS OF JAPAN vol. 17, no. 192 (E-1350) 14. April 1993 & JP,A,04 340 210
- PATENT ABSTRACTS OF JAPAN vol. 13, no. 8 (E-702) 10. Januar 1989 & JP,A,63 220 507
- PATENT ABSTRACTS OF JAPAN vol. 12, no. 168 (E-611) 20. Mai 1988 & JP,A,62 279 610

## Beschreibung

Die Erfindung betrifft ein Verfahren und eine Anordnung zur Erzeugung von Innenwicklungen gemäß den Oberbegriffen der Ansprüche 1 und 3 und geht aus von DE-A-38 10 037.

Bei Videorecordern oder Recordern für digitale Aufzeichnung und Wiedergabe von Signalen auf oder von einem Magnetband ist es bekannt, rotierende Kopfräder mit einem oder mehreren Köpfen einzusetzen. Die Signale sind dabei mittels Schrägspuren auf dem Magnetband aufgezeichnet. Um die Signale zwischen einem Kopfrad und dem feststehenden Teil einer Kopftrommel übertragen zu können, werden bekanntermaßen Drehübertrager verwendet. Diese Drehübertrager sind in den meisten Fällen entsprechend der Darstellung nach Figur 4 aufgebaut. Die Drehübertrager bestehen aus einem feststehenden Teil 40, der der feststehenden Kopftrommel zugeordnet ist, und aus einem dem um die Achse 44 drehenden Kopfrad zugeordneten und mit diesem sich drehenden Teil 41. Beide Teile sind mit je einer Wicklung 42, 43 versehen. Eine Kopftrommel-Anordnung muß so viele Übertrager besitzen, wie Köpfe auf dem Kopfrad vorhanden sind.

Die Verwendung solcher Übertrager ist beispielsweise aus der DE 38 10 037 A1 bekannt. Die dort eingesetzten Übertrager bestehen aus inneren und äußeren Ferritkernen, die jeweils eine Wicklung besitzen. Die Signalübertragung erfolgt radial zwischen den im äußeren, feststehenden Teil und den im inneren, drehenden Teil befindlichen Ferritringen.

Bei der Miniaturisierung von Kopftrommel-Einheiten sowie bei der Erhöhung der zu übertragenden Frequenzen und/oder bei steigender Anzahl von Übertragern, wie es insbesondere bei Digital-Recordern der Fall ist, verringert sich zwangsläufig das Volumen der Übertrager. Das bedeutet, daß die Genauigkeitsforderungen, die an die Übertrager gestellt werden, immer größer werden. Das betrifft einerseits die Ferritringe selbst, wie zum Beispiel den Spalt zwischen Außen- und Innenring, und andererseits die Wicklungen. Die Wicklungen, die aus einem sehr dünnen Draht bestehen (zum Beispiel in der Größenordnung von 0,15 mm Ø), müssen auf sehr engem Raum sehr exakt gewickelt werden. Um eine möglichst genau definierte Wicklung in einem Ferritkern unterzubringen, werden teilweise unterstützende Hilfsmittel eingesetzt.

So ist aus der DE 38 31 721 A1 ein Drehübertrager für einen Recorder bekannt, der einen radial wirkenden Übertrager verwendet. Zur exakten Führung der Drahtwicklung wird dort ein Kunststoffkörper mit Nuten verwendet, der einfach herstellbar ist und eine größe Genauigkeit der Wicklung gewährleistet.

Die Verwendung eines solchen Hilfsmittels ist jedoch relativ aufwendig und die Handhabung eines derartig kleinen Kunststoffringes ist sehr schwierig. Darüber hinaus ergeben sich bei der Erzeugung von Innenwicklungen 42, wie sie für den feststehenden Teil 40 des Übertragers benötigt werden, besondere Probleme.

In der nicht vorveröffentlichten DE 43 00 756 C2 (am 2. 12. 93 veröffentlicht) wird eine Einrichtung zum Wickeln einer Innenspule eines Übertragers beschrieben. Mittels eines Wickeldorns, der eine Quer-Längsbohrung zur Führung des Wickeldrahts aufweist, wird eine Innenspule in der Innennut eines Ferritrings erzeugt. Dazu wird der Ferritkern oder der Wickeldorn gedreht und zusätzlich in axialer Richtung entsprechend des Durchmessers des Wickeldrahts verschoben. Auf diese Weise werden exakte Innenwicklungen erzeugt. Nach Fertigstellung der Innenwicklung verbleibt der Wickeldorn im Ferritkern, damit die Innenwicklung ihre exakte Lage während der Befestigung der Innenwicklung im Ferritkern beibehält. Dazu wird der Ferritkern erhitzt, wodurch eine auf dem Wickeldraht angebrachte Haftschicht verbacken wird. Nach einer ausreichenden Abkühlung wird der Wickeldorn entfernt und steht für die weitere Erzeugung von Innenspulen zur Verfügung.

Nachteilig bei der bekannten Einrichtung zum Wickeln einer Innenspule ist die Tatsache, daß der Wickeldorn für die Zeitdauer des Befestigungsvorgangs der Innenspule im Ferritkern nicht benutzt werden kann. Zudem kann der durch den Wickeldorn geführte Wickeldraht durch die Erhitzung auch im Wickeldorn festkleben, bzw. die Haftschicht verändert sich so, daß die spätere Befestigung im Ferritring beeinträchtigt wird. Ein weiterer Nachteil ist die Führung des Wickeldrahts durch die Quer-Längsbohrung des Wickeldorns, wodurch die Nachführung des Wickeldrahts von einer Vorratsrolle erschwert wird, da sich der Wickeldraht um den Wickeldorn wickelt, falls dieser gedreht wird.

Aufgabe der vorliegenden Erfindung ist es deshalb, ein Verfahren und eine Einrichtung anzugeben, bei denen die aus dem Stand der Technik bekannten Nachteile nicht auftreten.

Diese Aufgabe wird durch die Merkmale der Ansprüche 1 und 3 gelöst. Vorteilhafte Weiterentwicklungen werden in den abhängigen Ansprüchen beschrieben.

Der besondere Vorteil des erfindungsgemäßen Verfahrens sowie der erfindungsgemäßen Einrichtung liegen darin, daß nach der Erzeugung einer Innenspule sofort eine weitere Innenspule erzeugt werden kann, ohne vorher die endgültige Befestigung der zuerst erzeugten Innenspule abwarten zu müssen. Desweiteren ergibt sich durch die Führung des Wickeldrahts in angenähert axialer Richtung durch den Wickeldorn der Vorteil, daß die Nachführung des Wickeldrahts auch bei Drehung des Wickeldorns ohne Probleme von einer Vorratsrolle erfolgen kann.

Weitere Vorteile ergeben sich aus der nachfolgenden näheren Beschreibung der Erfindung anhand von Zeichnungen.

Es zeigt
- Figur 1: den Aufbau des erfindungsgemäßen Wickeldorns sowie den Aufbau des verwendeten Spulenkörpers,
- Figur 2: in schematischer Form eine Vorgehensweise nach dem erfindungsgemäßen Verfahren zur Erzeugung von Innenwicklungen,
- Figur 3: den schematischen Aufbau einer erfindungsgemäßen Einrichtung zur Erzeugung von Innenwicklungen, und
- Figur 4: den Schnitt durch den bekannten Drehtransformator.

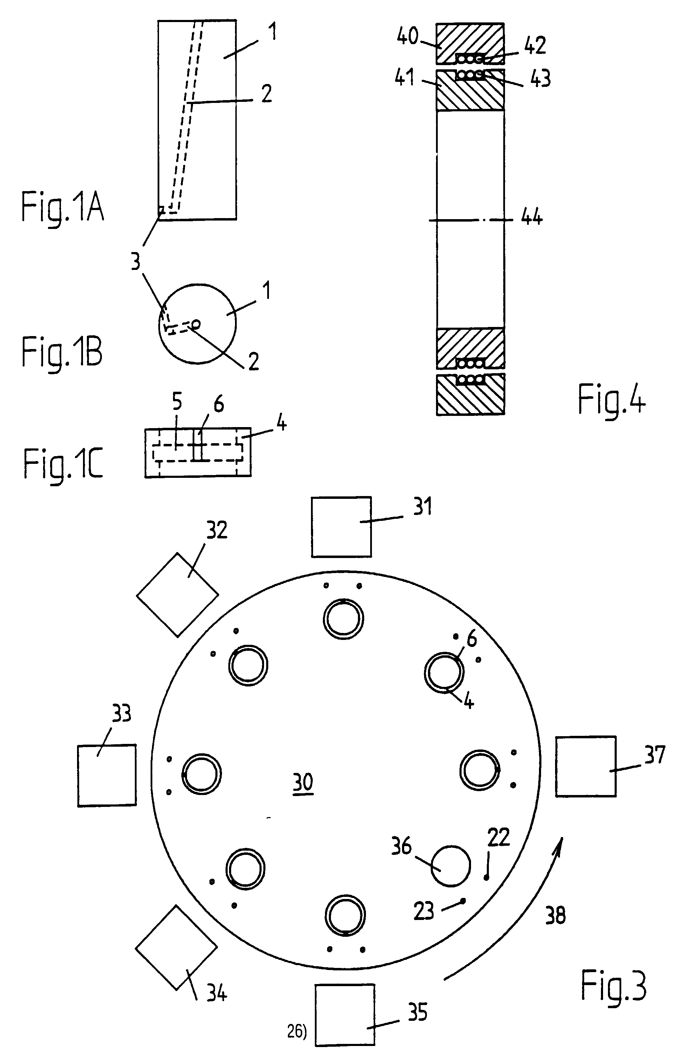

Zur Erzeugung von Innenspulen wird ein zylindrischer Körper 1, wie in Figur 1A gezeigt, als Wickeldorn verwendet. Der Wickeldorn weist eine im wesentlichen in axialer Richtung verlaufende Bohrung 2 zur Führung eines Wickeldrahts auf, die durch eine in der Zylinderfläche angeordnete Auslaßöffnung 3 fortgesetzt ist. Wie aus der in Figur 1B dargestellten Draufsicht zu entnehmen ist, weist die Auslaßöffnung 3 eine angenähert tangentiale Richtung zum zylindrischen Körper 1 auf, wodurch der Austritt des Wickeldrahts mit geringer Reibung in tangentialer Richtung zum Wickeldorn 1 ermöglicht wird. Um die Austrittseigenschaften weiter zu verbessern, kann die Auslaßöffung 3 aus hartmetallischem oder keramischem Material hergestellt sein.

Figur 1C zeigt einen ringförmigen Körper 4, der eine Innennut 5 und eine Nut 6 aufweist. Nut 6 wird als Einund Auslaß für den Wickeldraht verwendet, der die in der Innennut 5 liegende Innenwicklung bildet. Der ringförmige Körper 4 kann beispielsweise ein Ferritring sein.

Der Durchmesser des Wickeldorns 1 ist nur geringfügig (µm-Bereich) kleiner als der Innendurchmesser des Ferritrings 4, so daß der sich ergebende Innendurchmesser der zu erzeugenden Innenwicklung praktisch mit dem Innendurchmesser des Ferritrings 4 übereinstimmt.

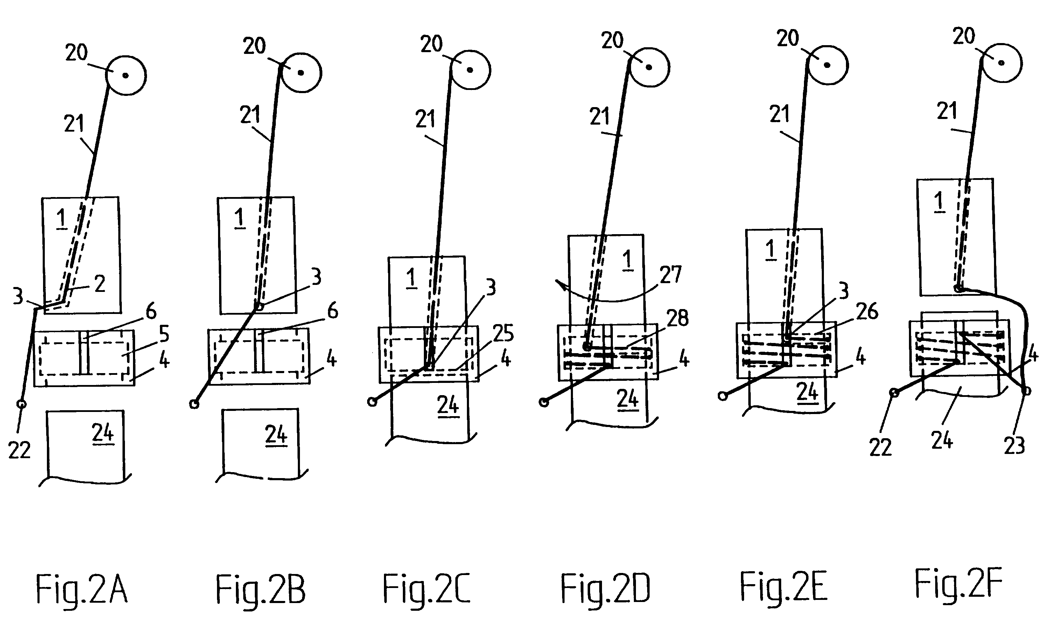

Figur 2 zeigt eine Vorgehensweise zur Erzeugung einer einlagigen Innenwicklung.

Der von einer Vorratsrolle 20 kommende Wickeldraht 21, der durch den Wickeldorn 1 geführt ist, wird zu Beginn (Figur 2A) mittels einer Einrichtung 22 außerhalb des Ferritrings 4 befestigt.

Danach (Figur 2B) wird der Wickeldorn 1 über dem Ferritkern 4 so ausgerichtet, daß die Auslaßöffnung 3 mit der Nut 6 lagegleich zusammentrifft.

Im nächsten Schritt (Figur 2C) wird der Wickeldorn 1 so weit in den Ferritkern 4 eingeführt, daß die Auslaßöffnung 3 auf der Höhe der Flanke 25 von Innennut 5 liegt. Der Wickeldraht 1 liegt somit an der Flanke 25 an.

Gleichzeitig wird der zylindrische Körper 24 von der anderen Seite in den Ferritring 4 eingeführt, bis er plan am Wickeldorn 1 anliegt. Der zylindrische Körper 24 kann beispielsweise von einer Hülse gebildet werden und weist den selben Durchmesser wie der Wickeldorn 1 auf. Statt Wickeldorn 1 und Hülse 24, wie oben beschrieben, in den Ferritkern 4 einzuführen, kann die Hülse 24 beispielsweise mittels einer Feder so in den Ferritkern 4 eingeschoben werden, daß sie zumindest die Innennut 5 vollständig abdeckt. Beim oben beschriebenen Einführen des Wickeldorns 1 erfolgt die exakte Positionierung der Hülse 24 dann automatisch.

Nach der Positionierung von Wickeldorn 1 und Hülse 24 wird der Wickeldorn 1 in die mit dem Pfeil 27 gekennzeichnete Richtung gedreht (Figur 2D, 2E). Entsprechend des Durchmessers des Wickeldrahts 21 und der Drehgeschwindigkeit des Wickeldorns 1 wird die Anordnung bestehend aus Wickeldorn 1 und Hülse 24 in axialer Richtung gegen die Flanke 26 verschoben, so daß sich eine Innenwicklung 28 mit exakt aneinanderliegenden Windungen ergibt. Der für die Innenwicklung 28 benötigte Wickeldraht 21 wird fortlaufend von der Vorratsspule 20 nachgeliefert. Neben der beschriebenen Bewegung in axialer Richtung von Wickeldorn 1 und Hülse 24 sowie der Drehung von Wickeldorn 1 ist auch die Bewegung und Drehung des Ferritkerns 4 möglich.

Ist die für die Innenwicklung 28 gewünschte Windungszahl erreicht, wird der Wickeldorn 1 so gestoppt, daß die Auslaßöffnung 3 des Wickeldorns 1 lagegleich mit der Nut 6 zusammentrifft.

Anschließend (Figur 2F) wird der Wickeldorn 1 aus dem Ferritring 4 entfernt und der Wickeldraht 21 wird außerhalb des Ferritrings 4 mittels einer Einrichtung 23 ein zweites Mal befestigt. Zeitgleich zur Entfernung des Wickeldorns 1 wird die Hülse 24 zumindest so weit in den Ferritring 4 eingeführt, daß die Innennut 5 vollständig überdeckt ist. Somit ist sichergestellt, daß die Innenwicklung 28 ihre exakte Lage beibehält.

Schließlich kann die Innenwicklung 28 im Ferritring 4 durch Erhitzen verbacken und damit befestigt werden. Die beiden Enden des Wickeldrahts 21 an den Einrichtungen 22 und 23 können sodann auf die gewünschte Länge abgeschnitten werden und die Hülse 24 kann aus dem Ferritkern 4 entfernt werden.

Neben der beschriebenen Methode des Verbackens in einem Ofen kann ein mit einer Haftschicht versehener Wickeldraht auch durch einen entsprechend bemessenen Stromfluß erhitzt und verbacken werden. Eine weitere Möglichkeit zur Befestigung der Innenspule stellt die Verwendung eines Klebstoffs oder eines Lösungsmittels, welches den Lack des Wickeldrahts anlöst und somit ein Verkleben erzielt, dar. Vorstehend genannter Klebstoff und Lösungsmittel können durch geeignete Bohrungen in der Hülse 24 in den Ferritring 4 eingebracht werden. Bei allen oben geschilderten Befestigungsmethoden hat es sich als vorteilhaft herausgestellt, die Hülse 24 mit einer Beschichtung zu versehen, die ein Anhaften der Innenwicklung vermeidet. Dazu eignet sich beispielsweise eine Teflonbeschichtung.

Figur 3 stellt schematisch den Aufbau einer Anordnung zur Erzeugung von Innenwicklungen dar. Auf einem Drehteller 30 sind auf der Oberfläche, entlang des äußeren Randes, Befestigungen 36 in äquidistanten Abständen angebracht. Die Befestigungen 36 dienen zur Aufnahme von Ferritringen 4 und weisen neben geeigneten Einrichtungen zur Halterung der Ferritkerne 4 die in Figur 2 gezeigte Hülse 24 auf. Jeder Befestigung 36 sind zudem die in Figur 2 gezeigten Einrichtungen 22 und 23 zur Befestigung des Wickeldrahts 21 zugeordnet.

Der Drehteller 30 dreht sich schrittweise um jeweils eine Befestigung 36 in die durch Pfeil 38 gekennzeichnete Richtung, so daß sich die Befestigungen jeweils vor einer Einrichtung 31 bis 37 befinden. Die Einrichtung 37 legt Ferritringe 4 in die Befestigungen 36 des Drehtellers 30 ein, wobei darauf geachtet wird, daß die Nut 6 in radialer Richtung des Drehtellers 30 nach außen weist. Die Ferritringe 4 werden von einer nicht näher gezeichneten Halterung fixiert und die Hülse 24 wird beispielsweise durch Federkraft in den Ferritring 4 eingeführt.

An der zwei Drehschritte entfernten Einrichtung 31 erfolgt die oben geschilderte Erzeugung der Innenwicklung. Zur Befestigung des Wickeldrahts können die Einrichtungen 22 und 23 als Klemmen ausgebildet sein. Eine andere Möglichkeit ist es, den Wickeldraht mittels des Wickeldorns 1 um Stifte zu wickeln, die die Einrichtungen 22 und 23 bilden. Somit wird der Wickeldraht, nachdem er an einer ersten Einrichtung 22 befestigt wurde, in den Ferritkern gewickelt, an einer ersten Einrichtung 23 befestigt, nach einer Teildrehung des Drehtellers 22 an einer zweiten Einrichtung 22 befestigt, usw.

Nach der nächsten Teildrehung wird an der Einrichtung 32 die Isolation des Wickeldrahts in der Nähe der Befestigungen 22 und 23 entfernt. Die Isolation kann beispielsweise abgeschmolzen werden. Dies ermöglicht es, daß nach der darauf folgenden Teildrehung von der Einrichtung 33 ein Strom in die Innenspule eingespeist wird, wodurch diese mittels einer auf dem Wickeldraht aufgebrachten Haftschicht innerhalb des Ferritrings befestigt wird.

Die nachfolgende Einrichtung 34 schneidet die aus dem Ferritring 4 ragenden Wickeldrahtenden auf die gewünschte Länge ab. Einrichtung 35 entnimmt schließlich den mit Innenwicklung versehenen Ferritring. Dazu wird die Hülse 24 aus dem Ferritkern entfernt und die Halterung 36 gelöst.

Die Steuerung und Koordination der einzelnen Einrichtungen 31 bis 37 sowie des Drehtellers 30, insbesondere auch des Wickeldorns 1 und der Hülse 24 in Einrichtung 31, kann durch einen Mikrocomputer oder durch eine bekannte CNC-Steuerung erfolgen.

Neben der beschriebenen Anordnung ist eine Vielzahl von abgeänderten, aber gleichwirkenden Anordnungen möglich, die sich für den Fachmann aus dem Beschriebenen ergeben.

Beispielsweise ist eine andere Anordnung der Einrichtungen 31 bis 37 um den Drehteller oder eine Zusammenfassung einiger der Einrichtungen 31 bis 37 möglich. Dazu könnten die Einrichtungen 32 und 33 (abisolieren und befestigen) zusammengefaßt werden oder die Einrichtungen 35 und 37 (auflegen und entfernen der Ferrittinge) könnten durch manuelle Bedienung ersetzt werden.

Ebenso kann eine von der Form des Drehtellers abweichende Anordnung der Halterungen 36 gewählt werden. Beispielsweise können die Halterungen 36 sowie die Einrichtungen 22 und 23 in der Art eines Fließbandes angeordnet werden.

Schließlich ist es möglich, statt Wickeldorn und Hülse axial zu bewegen und zu drehen, entsprechende Bewegungen mit dem Ferritring auszuführen.

## Patentansprüche

1. Verfahren zur Erzeugung einer einlagigen Innenwicklung (28) in einer Innennut (5) eines ringförmigen Körpers (4), der eine zweite Nut (6) für den Ein- und Auslaß eines Wickeldrahts (21) aufweist,
**dadurch gekennzeichnet,** daß
- ein erster (1) und ein zweiter (24) zylindrischer Körper von jeweils einer Seite paßgenau in den ringförmigen Körper (4) eingeführt werden, wobei durch den ersten zylindrischen Körper (1) in angenähert axialer Richtung (2) der Wickeldraht (21) geführt wird, der am in den ringförmigen Körper (4) eingeführten Ende des ersten zylindrischen Körpers (1) vorzugsweise angenähert tangential austritt (3) und durch die zweite Nut (6) in den ringförmigen Körper (4) geführt und außerhalb fixiert ist,
- der erste (1) und der zweite (24) zylindrische Körper aufeinanderzu bewegt werden, bis sie plan aneinander liegen,
- die Stelle des Austritts (3) des Wickeldrahts (21) aus dem ersten zylindrischen Körper (1) so positioniert wird, daß der Wickeldraht (21) an einer Flanke (25) der Innennut (5) anliegt,
- der erste zylindrische Körper (1) oder der ringförmige Körper (4) eine Anzahl von Drehungen entsprechend der Anzahl der gewünschten Windungen durchführt, wobei erster und zweiter zylindrischer Körper (1;24) oder der ringförmige Körper (4) entsprechend der sich aus dem Wickeldrahtdurchmesser und der Drehgeschwindigkeit des ersten zylindrischen Körpers (1) ergebenden Geschwindigkeit axial in Richtung zur anderen Seitenkante (26) der Innennut (5) bewegt werden,
- der erste zylindrische Körper (1) aus dem ringförmigen Körper (4) entfernt wird, wobei der Wickeldraht (21) durch die zweite Nut (6) aus dem ringförmigen Körper (4) geführt wird,
- gleichzeitig der zweite zylindrische Körper (24) so weit in den ringförmigen Körper (4) eingeführt wird, daß er die Innennut (5) vollständig überdeckt, und
- der zweite zylindrische Körper (24) aus dem ringförmigen Körper (4) entfernt wird, nachdem die Innenwicklung (28) fest mit dem ringförmigen Körper (4) verbunden worden ist.

2. Verfahren nach Anspruch 1,
**dadurch gekennzeichnet,**
daß die Innenwicklung (28) durch Erwärmung des ringförmigen Körpers (4), Stromfluß durch die Innenwicklung (28), Klebstoff oder Lösungsmittel fest mit dem ringförmigen Körper (4) verbunden wird.

3. Anordnung zur Erzeugung einer einlagigen Innenwicklung (28) in einer Innennut (5) eines ringförmigen Körpers (4), der eine zweite Nut (6) für den Ein- und Auslaß eines Wickeldrahts (21) aufweist,
**dadurch gekennzeichnet,** daß
- ein Wickeldorn (1) mit einer angenähert axial verlaufenden Bohrung (2) sowie einer die Bohrung (2) fortsetzenden, angenähert tangential verlaufenden Austrittsöffnung (3) vorhanden ist, durch welchen der Wickeldraht (21) geführt ist,
- ein zweiter zylindrischer Körper (24) vorhanden ist,
- Wickeldorn (1) und zweiter zylindrischer Körper (24) denselben Außendurchmesser aufweisen, welcher geringfügig kleiner als der Innendurchmesser des ringförmigen Körpers (4) ist,
- Wickeldorn (1) und zweiter zylindrischer Körper (24) von entgegengesetzten Seiten in den ringförmigen Körper (4) eingeführt werden,
- durch Drehung und axiale Bewegung von Wickeldorn (1) und zweitem zylindrischen Körper (24) oder wahlweise des ringförmigen Körpers (4) die Innenwicklung (28) erzeugt wird, und
- nach Fertigstellung der Innenwicklung (28) der Wickeldorn (1) aus dem ringförmigen Körper (4) entfernt wird, wohingegen der zweite zylindrische Körper (24) im ringförmigen Körper (4) verbleibt, bis die Innenwicklung (28) im ringförmigen Körper (4) befestigt ist.

4. Anordnung nach Anspruch 3,
**dadurch gekennzeichnet,**
daß die axiale Bewegung während einer Umdrehung dem Durchmesser des Wickeldrahts (21) entspricht.

5. Anordnung nach Anspruch 3 oder 4,
**dadurch gekennzeichnet,**
daß die mechanischen Eigenschaften der Austrittsöffnung (3) durch Verwendung von keramischem oder hartmetallischem Material verbessert werden.

6. Anordnung nach einem der Ansprüche 3 bis 5,
**dadurch gekennzeichnet,**
daß die Befestigung der Innenwicklung (28) im ringförmigen Körper (4) durch Erhitzung einer Haftschicht des Wickeldrahts (21) mittels Erwärmung oder Stromfluß durch die Innenwicklung (28) oder wahlweise durch die Einbringung von Klebstoff oder Lösungsmittel erfolgt.

7. Anordnung nach einem der Ansprüche 3 bis 6,
**dadurch gekennzeichnet,**
daß der zweite zylindrische Körper (24) mit einer Beschichtung, insbesondere "Teflon", versehen ist, welche ein Anhaften der Innenwicklung (28) am zweiten zylindrischen Körper (24) verhindert.

8. Anordnung nach einem der Ansprüche 3 bis 7,
**dadurch gekennzeichnet,**
daß der ringförmige Körper (4) ein Ferritring ist.

9. Anordnung nach einem der Ansprüche 3 bis 8,
**gekennzeichnet durch**
- eine Einrichtung (30), welche Befestigungsmittel (36;22,23) für den ringförmigen Körper (4) sowie den Wickeldraht (21) aufweist und fortlaufend schrittweise bewegt wird,
- Einrichtungen (31;...;37), zur Erzeugung der fest mit dem ringförmigen Körper (4) verbundenen Innenwicklung (28), die entsprechend der schrittweisen Bewegung der Einrichtung (30) angeordnet sind, und
- eine Steuereinrichtung, welche die beiden oben genannten Einrichtungen (30;...;37) steuert.

10. Anordnung nach einem der Ansprüche 3 bis 9,
**dadurch gekennzeichnet,**
daß die Steuereinrichtung von einem Mikrocomputer oder einer CNC-Steuerung gebildet wird, die insbesondere auch den Wickeldorn (1) sowie den zweiten zylindrischen Körper (24) steuert.

## Claims

1. Method of producing a single-layer internal winding (28) in an internal groove (5) of an annular body (4) comprising a second groove (6) for the inlet and outlet of a winding wire (21), characterized
- in that a first (1) and a second (24) cylindrical body are introduced exactly into the annular body (4) from one side in each case, wherein the winding wire (21) is guided in a substantially axial direction (2) through the first cylindrical body (1), the winding wire (21) preferably issuing (3) substantially tangentially at the end of the first cylindrical body (1) introduced into the annular body (4) and being guided through the second groove (6) into the annular body (4) and being fixed outside,
- in that the first (1) and the second (24) cylindrical body are moved toward one another until they lie flat on one another,
- in that the point of delivery (3) of the winding wire (21) from the first cylindrical body (1) is positioned such that the winding wire (21) rests on an edge (25) of the internal groove (5),
- in that the first cylindrical body (1) or the annular body (4) performs a number of rotations corresponding to the number of desired turns, the first and second cylindrical body (1;24) or the annular body (4) being moved axially toward the other lateral edge (26) of the internal groove (5) at the speed resulting from the winding wire diameter and the speed of rotation of the first cylindrical body (1),
- in that the first cylindrical body (1) is removed from the annular body (4), the winding wire (21) being guided from the annular body (4) through the second groove (6),
- in that the second cylindrical body (24) is simultaneously introduced so far into the annular body (4) that it completely covers the internal groove (5) and
- in that the second cylindrical body (24) is removed from the annular body (4) once the internal winding (28) has been rigidly connected to the annular body (4).

2. Method according to claim 1, characterized in that the internal winding (28) is rigidly connected to the annular body (4) by heating of the annular body (4), flow of current through the internal winding (28), adhesive or solvent.

3. Arrangement for producing a single-layer internal winding (28) in an internal groove (5) of an annular body (4) comprising a second groove (6) for the inlet and outlet of a winding wire (21), characterized
- in that a winding spindle (1) with a substantially axially extending bore (2) and a substantially tangentially extending outlet orifice (3) which continues the bore (2) and through which the winding wire (21) is guided is provided,
- in that a second cylindrical body (24) is provided,
- in that winding spindle (1) and second cylindrical body (24) have the same external diameter which is slightly smaller than the internal diameter of the annular body (4),
- in that winding spindle (1) and second cylindrical body (24) are introduced into the annular body (4) from opposite sides,
- in that the internal winding (28) is produced by rotation and axial movement of winding spindle (1) and second cylindrical body (24) or selectively of the annular body (4), and
- in that the winding spindle (1) is removed from the annular body (4) after production of the internal winding (28) whereas the second cylindrical body (24) remains in the annular body (4) until the internal winding (28) is fastened in the annular body (4).

4. Arrangement according to claim 3, characterized in that the axial movement during a rotation corresponds to the diameter of the winding wire (21).

5. Arrangement according to claim 3 or 4, characterized in that the mechanical properties of the outlet orifice (3) are improved by using ceramic or hard metallic material.

6. Arrangement according to one of claims 3 to 5, characterized in that the internal winding (28) is fastened in the annular body (4) by heating an adhesive layer of the winding wire (21) by warming or flow of current through the internal winding (28) or selectively by the introduction of adhesive or solvent.

7. Arrangement according to one of claims 3 to 6, characterized in that the second cylindrical body (24) is provided with a coating, in particular teflon, which prevents adhesion of the internal winding (28) on the second cylindrical body (24).

8. Arrangement according to one of claims 3 to 7, characterized in that the annular body (4) is a ferrite ring.

9. Arrangement according to one of claims 3 to 8, characterized by
- a device (30) which comprises fastenings (36;22, 23) for the annular body (4) and the winding wire (21) and is moved continuously stepwise,
- by devices (31;...;37) for producing the internal winding (28) which is rigidly connected to the annular body (4) and is arranged according to the stepwise movement of the device (30), and
- by a controller which controls the two above-mentioned devices (30;...;37).

10. Arrangement according to one of claims 3 to 9, characterized in that the controller is formed by a microcomputer or a CNC controller which also controls, in particular, the winding spindle (1) and the second cylindrical body (24).

## Revendications

1. Procédé pour produire un enroulement interne (28) à une seule couche dans une rainure intérieure (5) d'un corps de forme annulaire (4), qui comporte une seconde rainure (6) pour l'entrée et la sortie d'un fil de bobinage (21), caractérisé en ce qu'
- on introduit un premier corps cylindrique (1) et un second corps cylindrique (24), respectivement à partir d'un côté, et ce d'une manière ajustée de façon précise dans le corps annulaire (4), fil de bobinage (21) qui est guidé dans une direction approximativement axiale (2) à travers le premier corps cylindrique (1), qui sort de préférence approximativement tangentiellement (3) au niveau de l'extrémité du premier corps cylindrique (1), introduite dans le corps de forme annulaire (4), et qui est guidé dans la seconde rainure (6) aménagée dans le corps de forme annulaire (4) et est fixé à l'extérieur,
- on rapproche le premier corps cylindrique (1) et le second corps cylindrique (24) de manière qu'ils s'appliquent à plat l'un contre l'autre,
- on positionne le point de sortie (3) du fil de bobinage (21) du premier corps cylindrique (1) de manière que le fil de bobinage (21) s'applique contre un flanc (25) de la rainure intérieure (5),
- le premier corps cylindrique (1) ou le corps de forme annulaire (4) exécute un nombre de rotations correspondant au nombre des spires désirées, les premier et second corps cylindriques (1;24) ou le corps de forme annulaire (4) étant déplacés axialement en direction de l'autre bord latéral (26) de la rainure intérieure (5), conformément à la vitesse résultant du diamètre du fil de bobinage et de la vitesse de rotation du premier corps cylindrique (1),
- on écarte le premier corps cylindrique (1) du corps de forme annulaire (4), le fil de bobinage (21) étant guidé par la seconde rainure (6) pour sortir du corps de forme annulaire (4),
- on introduit simultanément le second corps cylindrique (24) dans le corps de forme annulaire (4) de manière qu'il recouvre complètement la rainure intérieure (5), et
- on retire le second corps cylindrique (24) du corps annulaire (4) une fois que l'enroulement interne (28) a été enroulé de façon fixe au corps annulaire (4).

2. Procédé selon la revendication 1, caractérisé en ce qu'on relie de façon fixe l'enroulement interne (28) au corps de forme annulaire (4) par chauffage du corps de forme annulaire (4), passage d'un courant dans l'enroulement interne (28), application de colle ou application d'un solvant.

3. Dispositif pour fabriquer un enroulement interne (28) à une seule couche dans une rainure intérieure (5) d'un corps de forme annulaire (4), qui possède une seconde rainure (6) pour l'entrée et la sortie d'un fil de bobinage (21), caractérisé en ce
- qu'il est prévu un mandrin de bobinage (1) comportant un perçage approximativement axial (2) ainsi qu'une ouverture de sortie (3), qui prolonge le perçage (2) et s'étend approximativement tangentiellement et dans laquelle le fil de bobinage (21) est guidé,
- qu'il est prévu un second corps cylindrique (24),
- que le mandrin de bobinage (1) et le second corps cylindrique (24) possèdent le même diamètre extérieur, qui est légèrement inférieur au diamètre intérieur du corps de forme annulaire (4),
- qu'on introduit le mandrin de bobinage (1) et le second corps cylindrique (24) à partir de côtés opposés dans le corps de forme annulaire (4),
- qu'on forme l'enroulement interne (28) en faisant tourner et en déplaçant axialement le mandrin de bobinage (1) et le second corps cylindrique (24) ou au choix le corps de forme annulaire (4), et
- qu'une fois que l'enroulement interne (28) est terminé, on retire le mandrin de bobinage (1) du corps de forme annulaire (4), tandis que le second corps cylindrique (24) subsiste dans le corps de forme annulaire (4) jusqu'à ce que l'enroulement interne (28) soit fixé dans le corps de forme annulaire (4).

4. Dispositif selon la revendication 3, caractérisé en ce que le déplacement axial pendant une rotation correspond au diamètre du fil de bobinage (21).

5. Dispositif selon la revendication 3 ou 4, caractérisé en ce que les caractéristiques mécaniques de l'ouverture de sortie (3) sont améliorées grâce à l'utilisation d'un matériau céramique ou d'un matériau métallique dur.

6. Dispositif selon l'une des revendications 3 à 5, caractérisé en ce que la fixation de l'enroulement interne (28) dans le corps de forme annulaire (4) s'effectue par chauffage d'une couche adhésive du fil de bobinage (21) par échauffement ou passage d'un flux de courant dans l'enroulement interne (28) ou au choix par application d'une colle ou d'un solvant.

7. Dispositif selon l'une des revendications 3 à 6, caractérisé en ce que le second corps cylindrique (24) est pourvu d'un revêtement, notamment en "Téflon", qui empêche une adhérence de l'enroulement interne (28) sur le second corps cylindrique (24).

8. Dispositif selon l'une des revendications 3 à 7, caractérisé en ce que le corps de forme annulaire (24) est un anneau de ferrite.

9. Dispositif selon l'une des revendications 3 à 8, caractérisé par
- un dispositif (30), qui comporte des moyens de fixation (36;22,23) pour le corps de forme annulaire (4) ainsi que le fil de bobinage (21) et est déplacé continûment pas-à-pas,
- des dispositifs (31;...;37) pour former l'enroulement interne (28), qui est relié de façon fixe au corps de forme annulaire (4), et qui sont disposés en fonction du déplacement pas-à-pas du dispositif (30), et
- un dispositif de commande, qui commande les deux dispositifs (30;...;37) indiqués plus haut.

10. Dispositif selon l'une des revendications 3 à 9, caractérisé en ce que le dispositif de commande est formé par un micro-ordinateur ou une unité de commande numérique CNC, qui commande notamment également le mandrin de bobinage (1) ainsi que le second corps cylindrique (24).
